# EUROPEAN PATENT SPECIFICATION

(11) **EP 1 505 369 B1**
(45) Date of publication and mention of the grant of the patent: **25.02.2009**
(21) Application number: 03017602.8
(22) Date of filing: 08.08.2003
(51) Int. Cl.: G01C 21/34

(54) **Method and system for outputting traffic data to a driver of a vehicle**
Verfahren und System zur Verkehrsdatenausgabe an einen Fahrzeugfahrer
Procédé et système pour fournir des données de trafic à un conducteur d'un véhicule

(43) Date of publication of application: 09.02.2005
(73) Proprietor: Harman Becker Automotive Systems GmbH, 76307 Karlsbad (DE)
(72) Inventor: Hovestadt, Guido, 58739 Wickede (DE); Behrens, Grit, 31174 Schellerten (DE); Behrens, Ralph, 31174 Schellerten (DE)
(74) Representative: Bertsch, Florian Oliver

(56) References cited:
- EP-A- 0 697 686
- EP-A- 1 045 224
- DE-A- 19 701 370
- DE-A- 19 933 638

## Description

### Field of the invention

The invention relates to a method for outputting traffic data to a driver of a vehicle and to a system for outputting traffic data to a driver of a vehicle, particularly a navigation system.

### Background of the invention

Recently, many cars have been equipped with a navigation-system the main tasks of which are the determination of the position of the vehicle, the calculation of an optimal driving route to a destination in response to an input of the desired destination by the driver, and route guidance (so-called "routing") of the driver to the final destination by outputting driving indications and recommendations to the driver as to which direction or street to turn onto.

Besides a computer system for data processing, navigation systems known in the art comprise a device for determining the position of the moving vehicle using a suitable positioning system such as GPS (global positioning system) or comparable systems as well as additional data from, e.g., a gyroscope sensor, the signal of the tachometer and the like. Digital map data of a road system of an area, for example of a country, is stored on a storage medium, e.g., a CD-ROM of the navigation system and is used for calculation of a driving route to a final destination by the navigation system. Based on the position data of the moving vehicle as determined by the GPS-system and according to the route calculated by the computer system driving recommendations for routing are output visually or acoustically to the driver, e.g., on a display mounted inside the car or by voice output.

Of course, routing by the navigation system should be performed under consideration of the actual traffic situation. In conventional navigation systems traffic data such as one-way streets or prohibitions of turning off and the like are stored together with the digital map data on the CD-ROM. That database is regularly updated by the provider of the database containing up-to-date traffic data for navigation purposes.

Recently, for receiving current traffic information from external information stations navigation systems have been, for example, connected with a car radio having a RDS (Radio Data System) - function in connection with a TMC (traffic message channel) - channel or with a telematic unit for wireless receipt of traffic information, e.g., by SMS (short message services) or GPRS (general packet radio system) using a GSM (global system mobilisation)-unit or a comparable wireless connection.

After receipt of the traffic announcement the received traffic data are automatically input to the database of the navigation system and utilized for calculation of the driving route. Thereby, a so-called "dynamic navigation" taking into account traffic data transmitted by external stations, for example traffic announcements received from broadcasting stations can be realized.

However, the traffic information provided by navigation systems of the prior art is restricted to the data (information) provided by the producer of the database or external information from any other provider which can be received 'online' via a wireless connection (e.g. RDS/TMC or GSM) or 'offline' via any storage medium (e.g. CD-ROM or flash media).

As a consequence, very often particular information which might be of interest for the individual driver is not provided. One reason for this is the restricted storage capacity of the navigation systems presently used. However, even if storage mediums having a higher storage capacity are expected to be developed in the near future, the amount of data being available per square kilometer of the area to be covered by the storage medium (i.e. the resolution) is restricted inherently.

Moreover, since up-dating of the traffic data by the database provider takes a certain time, the traffic data of conventional navigation systems in many cases are not up-to-date, i.e., they do not reflect the latest traffic events of the area where the driver is currently traveling.

The traffic information provided by the RDS/TMC-function or other systems or providers may be ,more up-to-date but, nevertheless, is often restricted as well to traffic information relating to major streets or highways, for example. Furthermore in the particular case of the RDS/TMC-function, the data transmission capacity is presently restricted to 20 to 30 traffic announcements per minute which can be transmitted encoded according to the international Standard "Alert- C-Protocol".

DE 197 01 370 A1 describes navigation system the map data of which can be edited by the driver by the use of means for detecting data such as velocity sensors. Examples given for attributes detected during the drive include the vehicle speed and the curve radii. The device also comprises means for manual input of the location of the attribute by the driver.

EP 1 045 224 describes a method including the acquiring of the current distance and attribute data from a route traversed using a test vehicle and updating the map data by the acquired data. The attributes relates to topographical data regarding the course of gradients and/or curves of sections of routes.

DE 199 33 638 A1 describes a method for attributing traffic data wherein a route leading from the point of departure to a final destination is determined and the vehicle is guided along said driving route. If the determined driving route is left before the arrival at the destination, the stretch covered until the determined route is re-entered, or until the destination is reached, is recorded and stored. If a route from the same point of departure and the same destination is requested later on, the stored stretch can be suggested as a route or a corresponding partial route and replaces an originally suggested partial route.

EP 0 697 686 describes a method involving the use of a memory containing the road network and a computer which outputs route suggestions based on a selected route. Routes travelled previously from the current position are maintained for the determination of the current route. The previous routes are displayed and are weighted according to their frequency. The current route can be selected automatically by comparing the stored routes with the path covered at the beginning of the current route.

### Summary of the invention

An object of the invention is to provide a method and a system for outputting traffic data to a driver of a vehicle enabling the provision of actual and detailed information to a driver of a vehicle.

These objects are accomplished by a method and a system for providing traffic data to a driver of a vehicle having the features of the independent claims, respectively. The dependent claims are directed to preferred embodiments and further developments of the invention.

The method for outputting traffic data to a driver of a vehicle according to the invention comprises the steps of providing location data of a traffic area in a computer system, allocating attribute data to data of the location data for generating traffic data comprising location data and allocated attribute data, wherein the step of allocating the attribute data to data of the location data is at least initiated by the driver, storing the generated traffic data, and outputting the generated traffic data and/or traffic data determined by the computer system in dependence on the generated traffic data to a driver of a vehicle.

Furthermore, the present invention provides a system for prodding traffic data to a driver of a vehicle comprising means for providing location data of a traffic area, allocating means for allocating attribute data to data of the location data, storage means for storing the generated traffic data comprising location data and the allocated attribute dada, and output means for outputting the generated traffic data and/or traffic data determined in dependence on the generated traffic data to a driver.

This also includes setting up the equipment direct or via remote control to collect data automatically.

According to the invention, the driver edits the database of the computer system by generating traffic data comprising location data and allocated attribute data. Thereafter, the generated traffic data is output to the driver for increasing the information level of the individual driver. Needless to say, the driver in the sense of the invention may be the co-driver or any other user of the system.

The term "attribute" in the sense of the invention may be any kind of information relevant for the individual driver or a user group which may be constituted by a plurality of drivers-having a particular common interest. For example, this common interest may result from travelling frequently within the same area or simply a shared hobby.

Preferably, the attribute relates to traffic faces. By allocation, the attribute data may be related to a single spot (location), a route or an area which are constituted by different amounts of location data, respectively. That is, attribute data in the sense of the invention represents an information being related to a certain location represented by a location datum or a plurality of location data defining e.g., a street or an area in other words a location attribute.

The attribute which is allocated by the driver to the location data for specifying the position of the attribute may be selected by the driver according to his personal preferences. Thereby, facts and information relating to a location, a route or an area which are of interest for the individual driver can be taken into account, for example, for calculation of a driving route.

For allocation to the location data, according to the invention the attribute data is generated by the driver by inputting an attribute into the computer based system. The attribute is defined by the user according to his subjective or objective impressions or perception. For example, the attribute may be taken from a newspaper or may be received from any other external information source such as television, radio or another driver and input into the computer-based system. Additionally, the attribute data may be selected from a list of different attributes already stored in a storage device of the computer based system.

The input of the attribute for generation of attribute data and/or the allocation of the attribute data to the location data may be supported by a suitable software-menu of the computer-based system. That is, the computer-based system is configured such that the input of the attribute and/or the allocation of the attribute data to the location data can be performed easily by any user including persons who are not familiar with data processing and operation of computer-based systems.

As a result, the database of the computer system is extended and up-dated currently by the driver so as to be up-to-the-minute. It is a particular advantage of the invention that the attribute selected and/or input by the driver may reflect traffic information regarding facts or circumstances of the current traffic and/or environmental situation (e.g. smog) which are of significance for the individual driver and which are not included in conventional databases and which are not provided by RDS/TMC-services or by any other service, either. For example, the attribute inputted by the driver may relate to small streets which are not included by available services but which are of importance for the individual driver who frequents them regularly, for example, on his daily driving way to his workplace.

Since the traffic data generated by the driver and/or traffic data determined by the computer system on the basis of the generated traffic data is output afterwards to a driver, an optimised driving as regards security, health, comfort, time and cost of driving is realized by the invention. The driver to whom the data is output may be identical to the driver who input the attribute or may be not.

According to a preferred embodiment of the invention, the attribute data is detected by the driver himself, advantageously during a trip with the vehicle. Detecting by the driver in the sense of the invention may include direct perception by sense organs, e.g. seeing, smelling and hearing, but also starting of a respective sensor measurement, as explained in detail later. In contrast, traffic information obtained from secondary information sources such as newspaper, television and the like do not represent a perception by sense organs in the sense of the invention.

By this measure, traffic events or circumstances that have not yet been identified to exhibit significance for traffic applications can be considered easily by the driver. Furthermore, the database is updated to be up-to-the-minute without any significant delay.

As already mentioned briefly above, the term "attribute" as used herein is not restricted to describe features or information or circumstances of the traffic situation in a narrower sense of "traffic" such as traffic congestions, speed limits and the like, but may refer to any feature or information relating, e.g., to a street or a route or an area which might be of significance for the individual driver according to his subjective feeling or opinion. Accordingly, information such as street crime, street lighting, pollen flight during the season, lovely environments, vistas or outlooks along a certain street or route represent attributes in the sense of the invention. As a result, information which is not included in conventional databases and which is not considered to represent traffic information in a literal sense can be detected and utilized, e.g., for navigation purposes.

According to a preferred embodiment of the invention, the attribute data detected by the driver includes driving data of the vehicle, which may be determined during a previous run along the same driving distance or at least a part thereof. Subsequently, when driving again the same driving route or a part thereof the detected driving data can be utilized, e.g., for calculation of an optimised driving route. Accordingly, a "learning system" capable of learning attribute data by detecting data of the vehicle during a previous trip along a predetermined route and utilizing this data for information purposes when driving the same route again or at least a part thereof is realized according to the invention.

In addition, the generated attribute data and/or the generated traffic data may be extracted 'online' or 'offline' and made available to any other user or user groups, for example to a service provider.

Preferably, the driving data (i.e. the attribute data) includes the driving time or the fuel consumption of the vehicle. Driving time may include the time of the day and/or the length of the trip, i.e., its duration. Further driving data may include without being limited to the number of actuations of the gas pedal or break pedal by the driver, turnings of the steering wheel by the driver above a predetermined angle, or waiting time due to traffic lights. Thereby, driving data that influence the comfort of the driver during the drive can be detected and utilized for navigation purposes.

The driving data may be detected by the driver using a variety of sensors known in the art which are mounted on the vehicle for measuring quantities such as time, driving direction, driving velocity, temperature, humidity, intensity of light, level of fuel tank, acceleration or deceleration of the vehicle. The term "sensor" shall include a digital photo or video camera.

The detection of attribute data such as driving data by the driver may be initiated by the driver by starting a measurement of the respective sensor directly or by starting the engine of the vehicle. Since the sensor may be connected to the computer system containing the location data, the driving data detected by the sensor may be automatically input into the computer system, if preset by the driver accordingly. Furthermore, the attribute data may be automatically allocated to location data as determined by the GPS-system by a suitable software installed on the board computer of the vehicle or the navigation system, it preset by the driver accordingly.

The traffic information may be input into the computer system by the driver by means of voice input and/or keyboard entry. In case of detection of attribute data by use of a sensor, inputting of the detected attribute data into the computer system may be performed automatically after its detection. In this case, detecting, inputting and allocation of attribute data is performed by the driver by simply starting a measurement of the respective sensor connected to the computer system and entering the respective commands.

The computer system may be a navigation system or a board computer installed inside the vehicle. However, the computer system is not necessarily located inside the vehicle and may be an external server to which the driver is connected via the internet using a telematic system of the vehicle having a wireless data interface such as GSM.

After initiation by the driver, the allocation of attribute data to the location data may be continued automatically by use of a suitable software, e.g., in dependence on position data of the vehicle, as described in detail below. The initiation may be performed by start of a sensor measurement, as described below.

The location data provided in the computer system may be selected from a storage device containing digital map data of an area including the driving route of the vehicle. In this case it is possible to generate the traffic data after the trip, e.g., at home by inputting the attribute into the computer system and selecting the respective location data where the respective attribute is located from the digital map data of the area stored, e.g., on a CD-ROM of the navigation system. The quantity of location data may depend on the resolution of the respective map and/or the respective storage medium.

According to a preferred embodiment of the invention, the location data provided is derived from position data of the vehicle detected by a suitable position detection device, which may be a GPS-unit having a receiver for receiving GPS-signals from a plurality of GPS-satellites. In this case, at the time of inputting the traffic information by the driver the position data of the vehicle may be allocated automatically to the traffic information by a suitable software of the computer system or via input commands by the driver and no additional location data source such as digital map data stored on a CD-ROM is required.

The resulting traffic data may be output to the driver on a display or/and by an audio response unit mounted inside the vehicle.

The traffic data generated according to the method of the invention may be output automatically to the driver in response to a predetermined GPS-signal which is received by the GPS-unit when the vehicle is approaching the position where the attribute is located. The output traffic data may include a warning to the driver against obstacles, such as break-up of roads or road works or the like, being present within a certain distance to the position of the vehicle.

The traffic data may also be output to the driver in response to an input of a driving destination by the driver. The navigation system calculates an optimised driving route to the destination input by the driver on the basis of the generated traffic data and outputs the determined driving route to the driver.

The driving route determined by the navigation system may be output to the driver on a display presenting a map of the respective area including a traffic event such as a speed limit, building site, etc. as described by the attribute. Accordingly, in this case not only traffic data depending on the generated traffic data, such as the driving route determined by the navigation system based on the generated traffic data as described above, but the generated traffic data itself is output to the driver.

As a result, since additional information is provided which is important for the individual driver, by carrying out the method of the invention calculation of a driving route and routing are significantly improved as compared to the performance of conventional navigation systems. Furthermore, since the driver may be warned against any current approaching obstacles, driving safety is significantly increased. A further advantage is that the traffic data used for navigation purposes is brought up to date without any delay.

The driver may select the attribute or a combination of attributes for navigation purposes according to his personal preferences and criteria. The driver may assign a weighting factor to the traffic information, for example, relating to the importance of the traffic data according to his personal opinion. Furthermore he may input and assign additional information to the generated traffic data, such as a time period during which the traffic information is valid (valid time) or an indication that the traffic data is generated by the user (driver). This information may be output together with the traffic data to the driver. As a result, routing and/or calculation of a driving route and/or warning by the computer system optimised according to the criterion selected by the individual driver, such as driving time, fuel consumption, avoiding areas of potential street crime, absence of pollen flight, presence of street lights etc., becomes possible.

The traffic data generated by the driver or the attribute detected by the driver may be transmitted to a second person or an external traffic station by the use of, e.g., a GSM-module of a telematic system together with the respective location data.

The traffic data generated by the driver may be transmitted as a dataset of the generated traffic data to any other person for information purposes for loading it into a computer system, e.g., for navigation purposes. The dataset of traffic data may be transmitted and/or stored on a server accessible for a plurality of users via the internet, for example. The person to whom the traffic data is transmitted may himself edit the traffic data by carrying out the method of the invention.

Further objects, features and advantages of the present invention will become apparent from the following description referring to the accompanying drawings, in which
- Fig. 1: schematically shows a situation where a driver of a vehicle is driving along a predetermined driving distance.
- Fig. 2: shows a flow chart illustrating the steps of generating traffic data according to a first embodiment of the invention by the driver of the vehicle shown in Fig. 1.
- Fig. 3: shows a flow chart illustrating the steps of outputting traffic data to the driver of the vehicle shown in Fig. 1 according to the first embodiment of the invention.
- Fig. 4: shows a flow chart illustrating the steps of generating traffic data according to a second embodiment of the invention by the driver of the vehicle shown in Fig. 1.
- Fig. 5: shows a flow chart illustrating the steps of outputting traffic data to the driver of the vehicle shown in Fig. 1 according to a second embodiment of the invention.
- Fig. 6: shows a flow chart illustrating the steps of generating traffic data according to the second embodiment of the invention by the driver of the vehicle shown in Fig. 1.
- Fig. 7: shows a configuration of a system for providing traffic data to a driver of a vehicle according to a first embodiment of the invention.

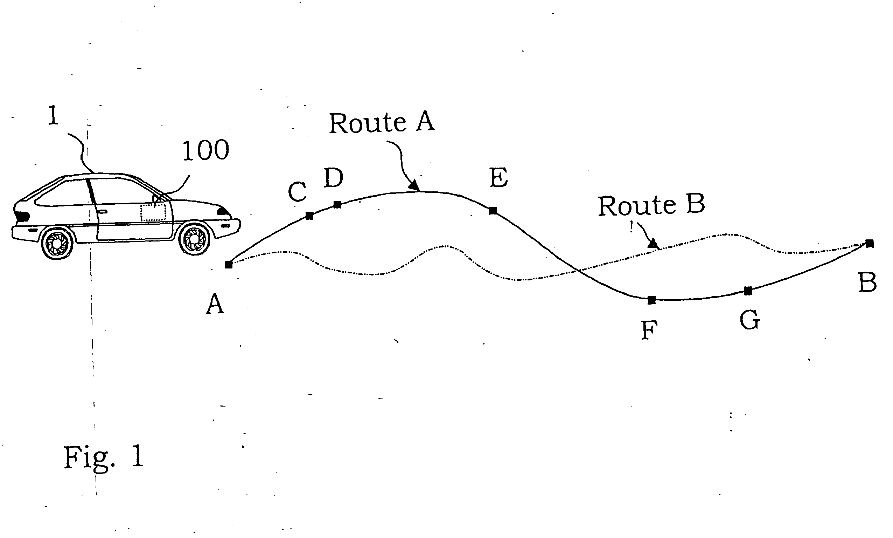

Figure 1 schematically illustrates a situation where a driver of a vehicle 1 is driving along a driving distance from a starting point A to a final destination B. A driving distance from starting point A to the final destination B includes different routes A, B which may comprise a plurality of roads going into different directions.

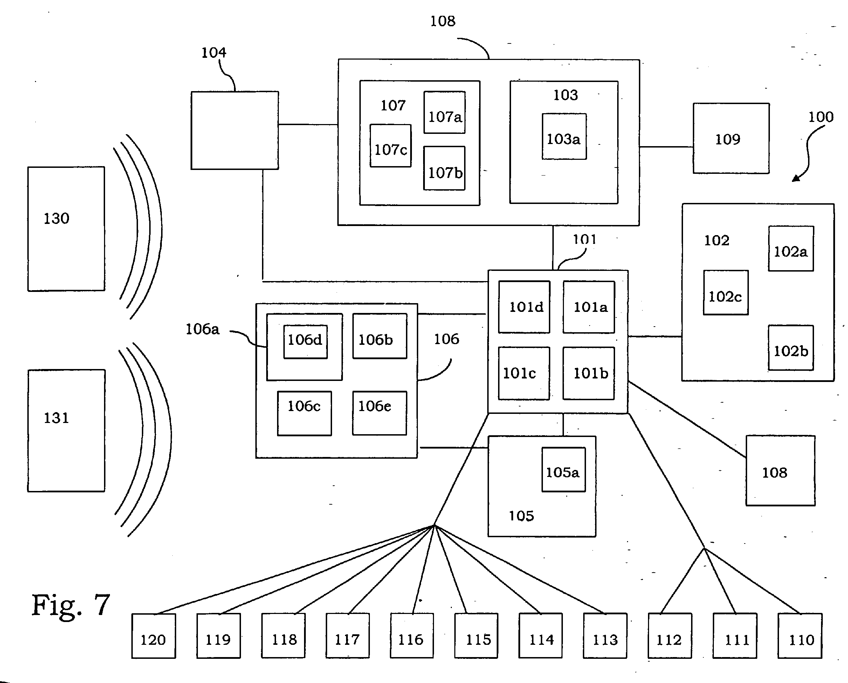

The vehicle 1 comprises a computer-based system 100 for providing traffic data to a driver of the vehicle 1 the configuration of which is shown in Fig. 7 which is described more in detail below.

Referring to Fig. 7, a GPS unit 105 of the computer-based system 100 mounted inside the vehicle 1 comprises transmitting/receiving antennas 105a for receiving GPS signals from GPS-satellites and is connected to a board computer 101 of the vehicle. The GPS receiver (not shown) of the GPS unit 105 receives GPS signals from GPS-satellites 132 in predetermined time intervals and the board computer 101 calculates the position of the vehicle 1 from the received GPS signals and data obtained from a wheel sensor 110 for measuring the rotational speed and a gyroscope 111 which are connected to the board computer 101.

Accordingly, in the present embodiment position data of the vehicle which is continuously determined by the GPS unit 105 and stored in a storage device 101d of the board computer 101 are provided as location data of a traffic area.

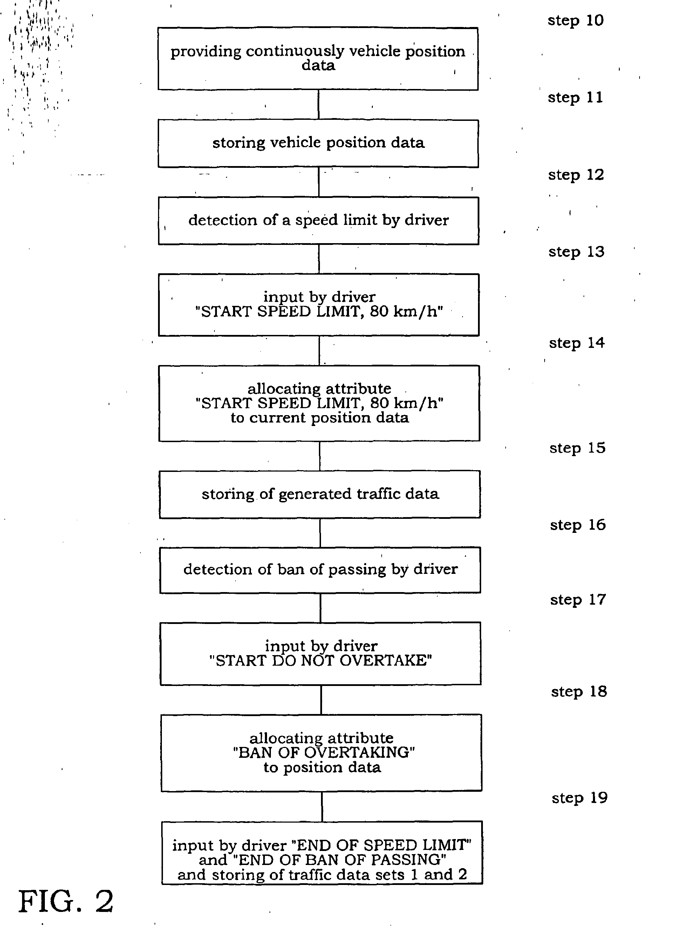

Referring to Figure 2, a first embodiment of the method according to the invention is described in the following. In step 10, position data of the vehicle is provided continuously as described above, and in step 11 the data is continuously stored in a storage device 101d of the board computer 4. Next, in step 12 the driver of the vehicle 1 detects a speed limit located at point C of Fig. 1 by visual perception of road signs installed beside the roadway. At this time, in step 13 the driver inputs into the computer system the information "START SPEED LIMIT, 80 KM/H" by manual keyboard entry. The inputting of the attribute may be facilitated by a suitable menu-driven software of the board computer 101 displaying menu options relating to different attributes such as icy road, tempo limit, building site etc. and appurtenant menu items such start of end-to-end measurement of a distance, end of end-to-end measurement etc. That is, it is possible to select an attribute already stored from a respective menu list or to generate the attribute data by input of the driver in case the respective attribute is not yet stored in the storage device 101d of the computer based system 100. This applies to all embodiments described herein.

After the input of the driver in step 13, the data processing means 101c of the board computer 101 which is continuously monitoring the position data of the vehicle in step 14 allocates continuously the attribute "SPEED LIMIT 80 KM/H" to the currently detected position data and stores the resulting traffic data in the storage device 101 d of the board computer 101 in step 15. The resulting traffic data contains location data of a road section combined with the attribute of a "speed limit" being present along the respective road section which is determined by the plurality of locations (i.e. the sum of the respective location data) of the road passed by the car as detected by the GPS-unit 105 and monitored by the system 100.

At point D of Fig. 1 of the driving distance a road sign is installed "NO PASSING". In step 16 this attribute "NO PASSING" is detected by the driver by visual perception. In step 17 the driver inputs by manual keyboard entry "START NO PASSING" into the board computer. In step 18 to the current position data which is detected continuously during the drive the attribute "NO PASSING" is allocated by the traffic data processing unit 101c of the board computer 101 and the resulting traffic data is stored in the storage device 101 d of the board computer.

Point E of Fig. 1 represents a location of the driving distance where road signs indicating the end of speed limit and the end of the ban of passing are installed. When the driver notices these traffic signs in step 19 he inputs into the system "END OF SPEED LIMIT" and "END OF NO PASSING". At this time the board computer stores the generated traffic data set 1 relating to the attribute "Speed limit" and the generated data set 2 relating to the attribute "NO PASSING" together with the respective position data detected during the time period between steps 13 and 19, and 17 and 19, respectively. Accordingly, traffic data set 1 comprises the location data of the distance between point C and point E and data of the attribute "Speed limit", whereas traffic data set 2 comprises the location data of the distance between point D and point E and data of the attribute "NO PASSING".

Instead of inputting the numerical value of the speed limit as to be 80 km/h in step 14, it is also possible for the driver to input solely "start of speed limit" and, furthermore to input a command "start of speed measurement" without specifying the value of speed limit. In this case in response to the input of the driver "start of speed measurement" the tachometer signal data is automatically allocated continuously as further attribute data to the position data of the vehicle in step 14. This may be advantageously if the speed limit changes frequently along the driving distance. Furthermore, it represents an exemplary embodiment of the invention wherein the detection of attributes is performed by sense organs of the driver and by sensor measurement in combination.

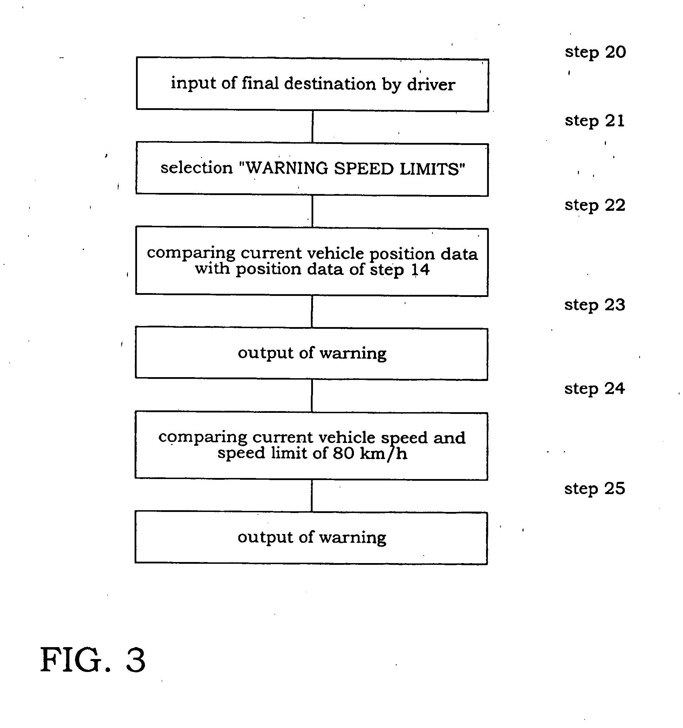

With reference to Fig. 3 the output of traffic data to the driver according to the first embodiment shown in Fig.2 is described in the following. The next time the driver decides to drive again along the distance from starting point A to the final destination B he inputs the final destination B into the system 100 in step 20. Furthermore, in step 21 he selects a menu option "AUTOMATICALLY WARNING AGAINST SPEED LIMITS" from the software menu of the board computer 101 of the vehicle 1.

After performing step 21, during the drive of the vehicle from starting point A in step 22 the processing means 101c of the board computer 101 continuously compares the current position of the vehicle to the position data detected in step 14. In step 23, if the vehicle approaches point C by reaching a predetermined distance to the location C, a warning is output automatically on a display 104 of the vehicle and by voice output "Attention - tempo limit 80 km/h".

Furthermore, after having detected the position data corresponding to point C of the driving distance in Fig. 2, the processing means 101c of the board computer 101 in step 24 continuously compares the signals received from the tachometer of the vehicle to the speed limit of 80 km/h. If it is detected that the vehicle is overspeeding 80 km/h a further warning is automatically output to the driver by means of voice output "SPEED LIMIT 80 KM/H, PLEASE REDUCE SPEED" in step 25.

The traffic data sets 1 and 2 generated by the driver may be stored in the storage device 101d of the board computer 101 as traffic data sets relating to the respective location data (i.e. section of driving distance) and/or as traffic data set relating to the respective attribute, in the present case speed limit.

The generated traffic data sets 1 and 2 can be easily transmitted, for example, to a server accessible for a plurality of users via the internet or to any other person and can be loaded as a data set into a, e.g., navigation system of another vehicle.

Furthermore, the generated traffic data set can be edited by the driver after driving by assigning further data such as valid time of the detected attribute. This may be advantageously in case the speed limit is present on the respective road only for a certain period of time. Furthermore, the driver may assign an indication to the generated traffic data that the data is user-generated. These indications may be output to the driver to indicate that the detected traffic data is generated by a private user and does not represent information from a producer of a commercial database or a broadcasting station.

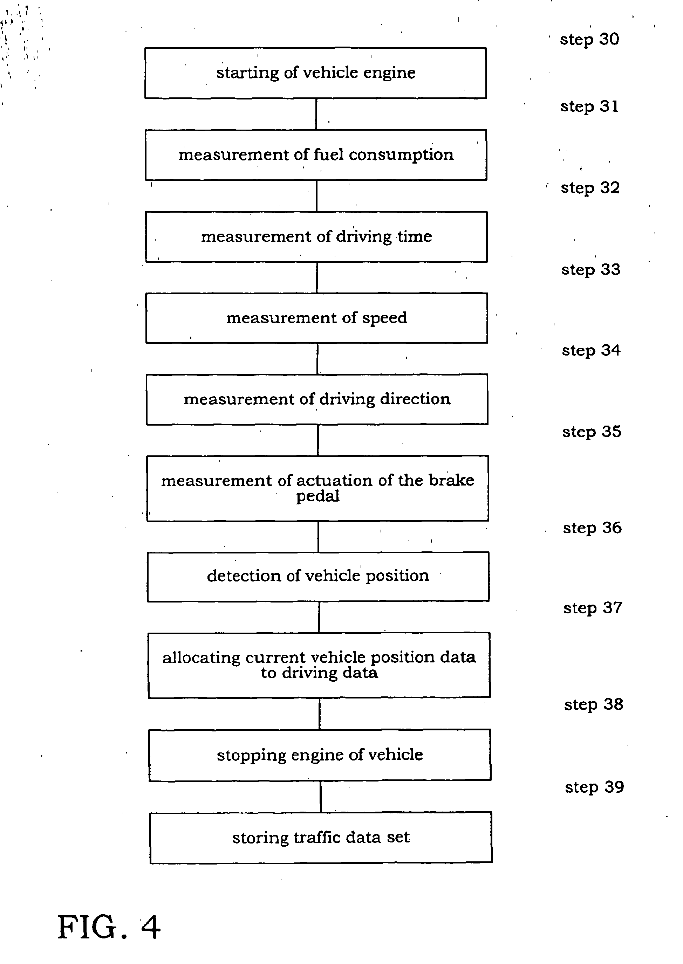

Referring to Figures 1 and 4, according to a second embodiment of the present invention driving data is detected as an attribute by sensors of the vehicle 1. By starting the engine of the vehicle in step 30, measurements of fuel consumption of the vehicle (step 31), driving time (step 32), speed of the vehicle (tachometer signal) (step 33), change of the driving direction (step 34) and actuation of the brake pedal (step 35) are automatically started by the driver before driving from starting point A to final destination B of Fig. 1 during the morning time at 9.00 a.m.. Incidentally, the respective sensors 110-120 for measuring driving data are shown in Figure 7.

During the drive, beginning at starting point A in step 36 the current position data of the vehicle is detected continuously and in step 37 the current position data of the vehicle is continuously allocated to the driving data detected by the sensor measurements started in steps 31-35. At the arrival at the final destination represented by point B in Figure 1 in step 38 the driver stops the engine thereby terminating the sensor measurements started in steps 31-35. In response thereto, in step 39 the generated traffic data set 1 including the attributes fuel consumption, time of driving, driving time (duration), velocity, change of driving direction and number of actuation of the brake pedal relating to the driving distance from starting point A to the final destination B according to route A is stored in the storage device 101 d of the board computer 101.

After driving from point A to point B along route A in Figure 1 and generating and storing the traffic data set 1 according to Figure 4 as described above, the driver is driving again along the driving distance from. starting point A to the final destination B of Figure 1 at 9.00 a.m. in the morning (second drive). However, while driving along different roads during the second drive the driver chooses another route B being different from route A. During the second drive the steps 31 to 35 of Figure 4 are performed again and the generated traffic data set 2 including data of fuel consumption, time, velocity, change of driving direction and number of actuations of the brake pedal, relating to route B is stored in the storage device 101d of the board computer 101. Accordingly, traffic data set 2 includes the same kinds of attributes (fuel consumption, day/night time, driving time, velocity, change of driving direction and number of actuations of the brake pedal) but relating to route B instead of route A.

Thereafter, the driver is driving a third time from starting point A to the final destination B (third drive). This time the driver once again chooses to drive along route A, however, in this case the driving time is in the evening (9.00 p.m.) after the rush hour. During the third drive, the same steps 31 to 39 are performed and a traffic data set 3 is generated and stored in the storage device 101d of the board computer 101. Accordingly, traffic data set 3 includes the same kinds of attributes as data sets 1 and 2, wherein the location data being related to route A corresponds to the location data of data set 1, however, the driving time being different as compared to data set 1.

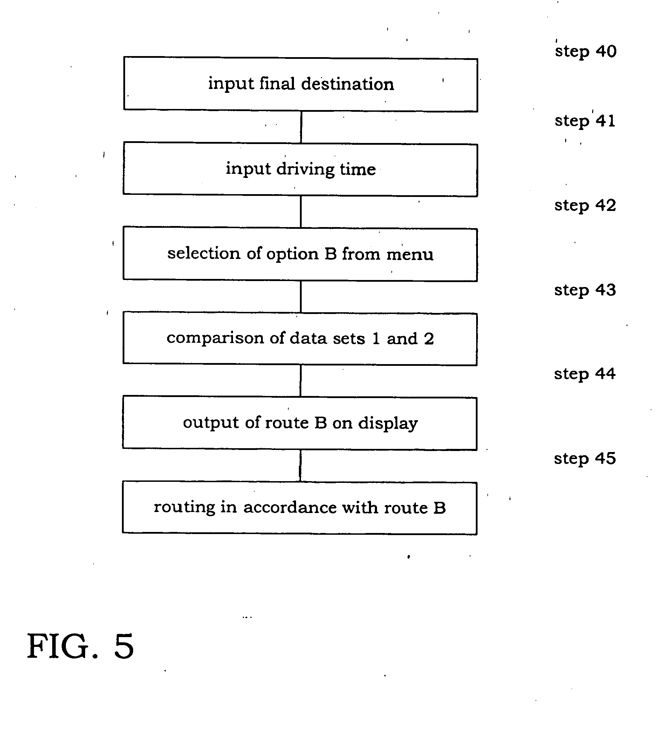

Figure 5 illustrates the steps of outputting traffic data after the generation of the traffic data sets 1 to 3.

The driver plans to drive from starting point A to the final destination B as shown in Figure 1 (fourth drive). In step 40 the driver inputs the final destination "B" and in step 41 she/he inputs the desired time of driving, e.g., "8.30 a.m." in the board computer 101. Next, on a display 104 of the system 100 a prompt is displayed "Calculation of driving route in accordance with Option A: driving time, Option B: fuel consumption, Option C: comfort of driving, Option D: any combination of options A/B/C". In step 42 the driver selects option B from the software menu, for example.

In step 43, the data sets 1 and 2 relating to the morning time are compared as regards the criterion of minimum amount of fuel consumption by the processing means 101c of the board computer 101. In step 44, route B exhibiting a lower fuel consumption along the driving distance is output together with a street map of the respective area including starting point A and final destination B on the display 104 of the system 100. In step 45, routing of the driver via route B is performed by a navigation unit 101a of the board computer 100 by indicating the driving direction on the display 104 and by voice output according to conventional routing methods performed by navigation systems known in the art.

In case the driver selects option C "comfort of driving", in step 42 on the display 104 of the system 100 the route exhibiting a higher comfort to the driver is outputted. The comfort of the driving routes A and B during the first second and third drive is calculated by a suitable algorithm on the basis of weighting factors for the different attributes relating to the comfort of driving, namely, actuation of brake pedal, numbers of changes of directions, number and length of time period during which the vehicle is not moving (e.g. waiting time at traffic lights).

The weighting factor may also be assigned by the driver. For example, in response to a prompt output by the software menu the driver may assign a high relevance to the number of actuations of the steering wheel in order to choose a driving route extending mainly straight instead of a driving route including many turnings or bends.

In the present embodiment, since the driver inputted the desired driving time 9.00 a.m. for the fourth drive into the board computer only the traffic data sets 1 and 2 of the first and second drive are selected and compared by the processing means 101c board computer 101. In contrast, if the driver does not specify the driving time for the fourth drive in step 41 the board computer compares all traffic data sets 1 to 3 for determination of the optimal driving route regardless of the time of driving.

Since in the present embodiment the driving data sets 1 to 3 differ from each other in dependence of the driving time, the driving route can be determined by the board computer in dependence on the day time. This is in particular advantageously in cases where the optimal driving route as regards the driving time depends strongly on the occurrence of traffic jam during the rush hour, for example.

Needless to say, the detection of driving data is not restricted to the measurements shown in Fig. 4 or to the sensors shown in Fig. 7 and any driving data measured by sensors may be utilized for the generation of traffic data according to the invention.

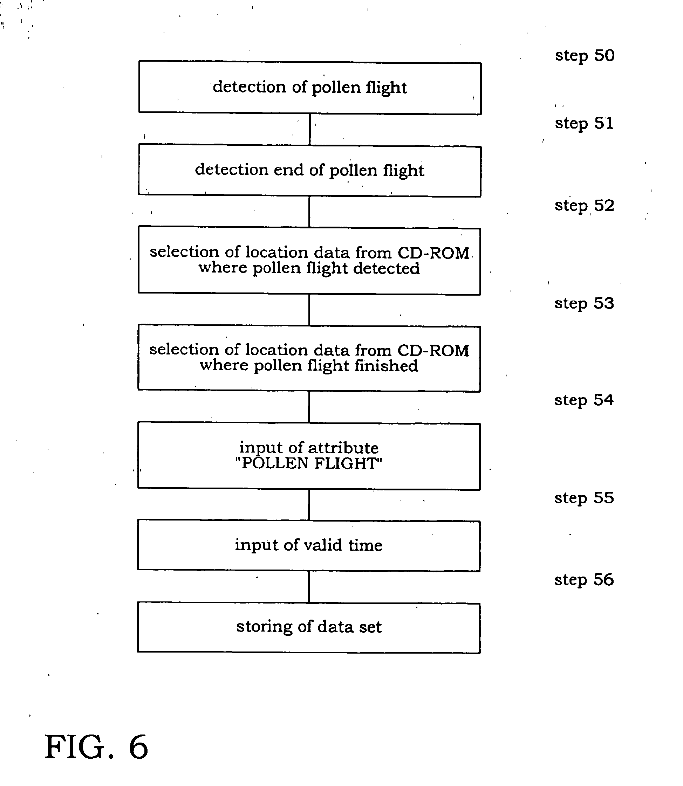

The detection of pollen flight during the season as a attribute is described according to a third embodiment of the present invention with reference to Figures 6 and 1. The driver is driving again along the driving distance from starting point A to the final destination B of Figure 1 and in step 50 he detects the presence of pollen flight in the air due to an allergic reaction of his immune system at point F of the driving distance. At point G the driver notices in step 51 that there is no more pollen flight present in the air. The driver makes a mental note of the place where he detected the pollen flight at first and the place where the perception of the pollen flight finished.

After the drive the driver edits the data base of the board computer by selecting the location where he first detected the pollen flight (point F) in step 52 and the location where he noticed the end of pollen flight (point G) in step 53 from digital map data of a CD-ROM including location data of the respective traffic area. In step 54 he inputs the attribute pollen flight into the board computer 101. Thereby, the attribute pollen flight is assigned to the location data of the distance from point F to point G by the driver. The respective distance from point F to point G is determined by the processing means 101c and output on the display 104 so that it can be easily checked by the driver to correspond to the section of the driving route where the driver detected the pollen flight.

In case the distance between point F and point G includes road junctions, it may be useful for the driver to specify the distance between point F and point G more in detail by selecting further location data from the digital map data. Furthermore, in step 55 the driver inputs a time period as to when pollen flight occurs according to his opinion, e.g., from April to June. In step 56 the generated traffic data set is stored in the storage device of the board computer.

The traffic data set generated according to the third embodiment of the present invention includes the attribute pollen flight, its duration time from April to June, and the road section from point F to G. The traffic data may be used for navigation purposes or for outputting a warning for example, for example as described above with reference to Fig. 3 and 4.

The present invention is not restricted to the embodiments described above. In particular, the different modes of detecting the attribute, generating the attribute data and the traffic data, and outputting the traffic data to the driver may be combined in any suitable manner to put the invention to practice according to the understanding of a person skilled in the art. For example, the traffic data relating to the attribute "Speed limit") may be used for navigation purposes (input: e.g. avoid roads comprising "SPEED LIMIT 80 KM/H") as well as for output of warnings as described with reference to Fig.3.

In Figure 7 a configuration of an embodiment of a computer-based system 100 for providing traffic data to a driver of a vehicle according to the invention is shown schematically. The system 100 comprises a board computer 101 mounted inside the vehicle to which an input device 102, a CD-ROM drive 103, a visual display unit 104, a GPS unit 105, a telematic unit 106, a radio unit 107 and a plurality of sensors 110-120 are connected via data bus.

The input means 102 for inputting attributes includes a keyboard 102a, a microphone 102b and a speech recognition unit 102c for translating the input of the driver via microphone 102b. The input means 102 is used for inputting attributes and may be adopted to operate the radio unit 107 and the telematic device 106.

Into the CD-ROM drive 103 a CD comprising road map data of the area is inserted. The CD comprises data of towns, villages, streets and street numbers etc., for example, of Germany. The CD-ROM drive 103 comprises a 10-disk changer 103a for receiving a plurality of CDs or DVDs containing road maps of e.g. different countries. A visual display unit 104 is provided for displaying the digital road maps on which the driving route calculated by the navigation unit 101a of the board computer 101 may be superimposed. Furthermore, on the visual display unit 104 the attributes input via the input means 102 and information received or sent via the telematic unit 106 or the radio unit 107 or a warning to the driver may be displayed.

A radio unit 107 including a car radio 107a and an amplifier 107b is provided for receiving VHF, MF, LF and HF transmission and includes an RDS (radio data system) module 107c for RDS function in connection with a TMC channel (traffic message channel)-function. The radio unit 107 receives information data from, e.g., broadcasting services via a radio transmitter 130 by a receiving antenna not shown in Figure 7. The RDS/TMC data received by the RDS module 107b from the radio transmitter 130 is automatically processed by the processing means 101c of the board computer 101 without being selected or input, by the driver.

The radio unit 107 and the CD-ROM drive 103 are disposed in a housing 108. A set of four speakers 109 is connected to the radio unit 107. The speakers 109 can be temporarily switched to microphone mode, so that the speaker 109 can be used as a microphone, e.g., in wireless mode.

A telematic unit 106 comprises a wireless telephone 106a including a GSM-module 106b for wireless communication which is preferably activated by a GSM-card using a card reader not shown in Figure 7. Alternatively, a default pin permanently set in the factory may be used or the pin may be set automatically the first time the GSM card is inserted.

To the GSM module 106b transmitting/receiving antennas 106c are connected to provide a communication link with an external GSM station 131. The wireless telephone 106a includes a headset 106d and the telematic unit 106 comprises a text-to-speech unit 106e for outputting the received GSM signals acoustically by speech output via the speakers 108. Besides the headphone 106d, information can be input into the telematic unit 106 by means of the input means 102 comprising the keyboard 102a and the microphone 102b.

The telematic unit 106 provides a bi-directional communication of the driver with any other person or an external station according to the known principals of a telematic unit which are not described here in further detail.

For example, the driver may receive a traffic information and respective position data of the traffic information via the telematic device 106. The driver decides whether to input that traffic information together with the position data into the board computer via the input means 102. The driver may send traffic information detected by him together with the respective location data to an external station where the generated traffic data is stored and the driving route to a final destination as input by the driver is calculated and retransmitted to the driver who sent the information or to any other driver. In this case, headset 106d of the telematic unit 106 may be used as input means for inputting traffic information according to the method of the invention. The traffic data retransmitted and output to the driver comprise the calculated driving route and driving recommendations which are output sequentially in dependence on the position of the vehicle as determined by the GPS unit and the optimal driving route calculated based on the generated traffic data.

The GPS-unit 105 comprises transmitting/receiving antennas 105a for receiving GPS signals from a plurality of GPS satellites 132. The GPS-unit 105 is connected to the telematic unit 106 so that the position data of the vehicle may be sent to an external station via the transmitting/receiving antennas 105a.

The board computer 101 comprises a navigation unit 101a for navigation purposes such as calculating an optimal driving route and outputting driving recommendations on the display unit 104 or the speakers 109. An engine management system 101b of the board computer 101 is provided for controlling the engine of the car in dependence of the generated traffic data as described above with reference to embodiment 2.

The board computer 101 is connected to an ignition lock 108 so that sensors 110-120 may be automatically started after starting the engine. The system of Figure 7 comprises a plurality of sensors including a wheel sensor 110 for measuring the rotational speed, a gyroscope 111, a digital photo/video camera 112, a speedometer 113, a humidity sensor 114, a temperature sensor 115, an angle sensor 116 of the steering wheel, a sensor 117 for the actuation of the brake pedal, a sensor 118 for actuation of the gas pedal, a sensor 119 for measuring the fuel consumption of the vehicle and a clock 120.

The driving sensors 110-120 detect driving data of the vehicle along a predetermined driving distance. The detected driving data is allocated by the driver to location data from the CD-ROM inserted in the CD-ROM drive 103 or to position data of the vehicle as detected by the GPS-unit 105. The generated traffic data is processed and stored in a storage device 101d of the board computer by a data processing means 101c. The processing means 101c is capable of performing any suitable data processing necessary to put the invention to practice such as comparing, storing and allocating data as described above with reference to the embodiments 1-3. Furthermore, processing includes the conversion of the traffic data to a data format suitable to be output to the driver via the display unit 104 or the speakers 109. A menu driven software program is installed on the board computer for facilitating the input and/or selection operation of the attribute by the driver.

## Claims

1. Method for outputting traffic data to a driver of a vehicle comprising the steps of
- providing location data of a traffic area in a computer-based system (100),
- allocating attribute data to data of said location data for generating traffic data comprising location data and allocated attribute data, wherein the step of allocating said attribute data to data of said location data is at least initiated by said driver,
- storing said generated traffic data, and
- outputting said traffic data and/or traffic data determined by said computer system (100) in dependence on said generated traffic data to a driver of a vehicle,
**characterized by** the further step of generating said attribute data by defining an attribute by the driver by inputting an attribute into said computer system.

2. Method according to claim 1, **characterized by** further step of detecting said attribute by said driver.

3. Method according to claim 1, **characterized in that** said attribute includes driving data of said vehicle (1).

4. Method according to claim 3, **characterized in that** said driving data comprises driving time and/or fuel consumption of said vehicle (1).

5. Method according to at least one of the claims 1, 3 or 4,
**characterized in that** said attribute is detected by sensor measurement of a sensor (110-120) of said vehicle.

6. Method according to at least one of the preceding claims,
**characterized in that** said attribute is detected continuously during a distance drive of the vehicle.

7. Method according to at least one of the claims 1, 2 or 6,
**characterized in that** said attribute includes attributes detected by the sense organs of said driver.

8. Method according to at least one of the preceding claims,
**characterized in that** said attribute is related to a spot (location), a street, a route or an area.

9. Method according to at least one of the preceding claims,
**characterized in that** said attribute is describing the environmental situation and/or condition of a location, a street or an area.

10. Method according to at least one of the preceding claims,
**characterized in that** said attribute comprises at least one kind of data from the group speed, acceleration, speed limit, building site, pollen flight, illumination, smog, environmental condition, weather condition and street crime.

11. Method according to at least one of the preceding claims,
**characterized in that** said location data comprises map data.

12. Method according to at least one of the preceding claims,
**characterized in that** said location data comprises position data of said vehicle (1).

13. Method according to at least one of the preceding claims,
**characterized in that** said attribute is input by said driver by means of voice input and/or keyboard.

14. Method according to at least one of the preceding claims,
**characterized in that** at least one of the steps of detecting said attribute by a sensor, inputting said attribute data into said computer system, allocating said attribute data to data of said location data and storing said generated traffic data is automatically performed after starting the engine of said vehicle.

15. Method according to at least one of the preceding claims,
**characterized in that** said generated traffic data or said traffic data determined by said computer system on the basis of said generated traffic data is output in dependence on position data of said vehicle.

16. Method according to at least one of the preceding claims,
**characterized in that** said generated traffic data or said traffic data determined by said computer system on the basis of said generated traffic data is output in response to an input of a driving destination by said driver.

17. Method according to at least one of the preceding claims,
**characterized in that** said output traffic data includes a time period during which said data is valid.

18. Method according to at least one of the preceding claims,
**characterized in that** said output traffic data is determined by said computer system in dependence on a weighting factor assigned to said attribute by said driver.

19. Method according to at least one of the preceding claims,
**characterized in that** said output data includes an indication that the output data is user-generated determined based on traffic data.

20. Method according to any of the preceding claims, **characterized by** the steps of transmitting the generated traffic data to a second driver who is different from the driver who generated the traffic data and outputting said traffic data to said second driver.

21. Method according to at least one of the preceding claims,
**characterized by** the step of calculating a driving route to a final destination on the basis of said generated traffic data and outputting said calculated driving route to the driver by said computer system.

22. Method according to claim 21, **characterized by** the step of routing a driver to a final destination based on the generated traffic data by said computer system.

23. Method according to claim 21 or 22, **characterized in that** routing of the driver or calculating of the driving route is based on a criterion or a combination of criteria set by said driver.

24. Method according to claim 23, **characterized in that** said criterion is driving time and/or fuel consumption and/or the absence of pollen flight.

25. Method according to at least one of the preceding claims,
**characterized in that** the method includes the step of outputting a warning to the driver when a preset condition depending on the generated traffic data is fulfilled.

26. Method according to at least one of the preceding claims,
**characterized in that** additional traffic data is received from an external information station and/or an internal storage device and processed together with said generated traffic data and output to said driver.

27. Method according to at least one of the preceding claims,
**characterized in that** the steps of inputting said detected attribute into said computer system and generating said traffic data are performed after the drive.

28. Method according to at least one of the preceding claims,
**characterized in that** the driver who generates the attribute data and the driver to whom said traffic data is output are identical.

29. Computer-based system for providing traffic data to a driver of a vehicle comprising
- means (105; 103) for providing location data of a traffic area,
- allocating means (101c) for allocating attribute data to data of said location data,
- storage means (101d) for storing said generated traffic data comprising said data of said location data and said allocated attribute data, and
- output means (104; 109) for outputting the generated traffic data and/or traffic data determined in dependence of said generated traffic data to a driver,
**characterized by** means (101, 102) for generating attribute data comprising means for defining an attribute by the driver by inputting an attribute into said computer system.

30. System for providing traffic data to a driver of a vehicle according to claim 29, **characterized by** selection means (102) for selecting attribute data stored in said computer based system (100).

31. System for providing traffic data to a driver of a vehicle according to claim 29 or 30, **characterized by** detecting means (110-120) for detecting attribute data.

32. System for providing traffic data to a driver of a vehicle according to claim 31, **characterized in that** said detecting means (110-120) includes a device for measuring at least one of the quantities: time,
day time, driving direction, driving velocity, temperature, humidity, intensity of light, fuel consumption, acceleration of the vehicle, vehicle noise, ambient noise, and deceleration of the vehicle.

33. System for providing traffic data to a driver according to at least one of claims 29 -32 **characterized in that** said means (105; 103) for providing location data comprises means for determining the position of the vehicle (105, 110, 111).

34. System for providing traffic data to a driver according to claim 33 **characterized in that** said means for determining the position of the vehicle comprises a receiver for receiving position data for determining the position data of said vehicle.

35. System for providing traffic data to a driver according to at least one of claims 29-34, **characterized by** a telematic unit (106) for receiving further traffic data and /or position data from an external information station and for transmitting the generated traffic data to an external station.

36. Navigation system comprising a system according to at least one of claims 29-35.

## Patentansprüche

1. Verfahren zum Ausgeben von Verkehrsdaten an einen Fahrer eines Fahrzeugs, die folgenden Schritte umfassend
- Bereitstellen von Ortsdaten eines Verkehrsgebiets in einem computerbasierten System (100),
- Zuweisen von Attributdaten zu den Daten der Ortsdaten zum Generieren von Verkehrsdaten, die Ortsdaten und zugewiesene Attributdaten umfassen, wobei der Schritt des Zuweisens der Attributdaten zu Daten der Ortsdaten von dem Fahrer zumindest initiiert wird,
- Speichern der generierten Verkehrsdaten, und
- Ausgeben der Verkehrsdaten und/oder von Verkehrsdaten, die durch das Computersystem (100) in Abhängigkeit von den generierten Verkehrsdaten bestimmt wurden, an einen Fahrer eines Fahrzeugs,
**gekennzeichnet durch** den weiteren Schritt eines Generierens der Attributdaten **durch** Definieren eines Attributs **durch** den Fahrer **durch** Eingeben eines Attributs in das Computersystem.

2. Verfahren nach Anspruch 1, **gekennzeichnet durch** den weiteren Schritt eines Detektierens des Attributs **durch** den Fahrer.

3. Verfahren nach Anspruch 1, **dadurch gekennzeichnet, dass** das Attribut Fahrdaten des Fahrzeugs (1) umfasst.

4. Verfahren nach Anspruch 3, **dadurch gekennzeichnet, dass** die Fahrdaten eine Fahrzeit und/oder einen Kraftstoffverbrauch des Fahrzeugs (1) umfassen.

5. Verfahren nach mindestens einem der Ansprüche 1, 3 oder 4, **dadurch gekennzeichnet, dass** das Attribut durch eine Sensormessung eines Sensors (110-120) des Fahrzeugs detektiert wird.

6. Verfahren nach mindestens einem der vorstehenden Ansprüche, **dadurch gekennzeichnet, dass** das Attribut kontinuierlich während einer Distanzfahrt des Fahrzeugs detektiert wird.

7. Verfahren nach mindestens einem der Ansprüche 1, 2 oder 6, **dadurch gekennzeichnet, dass** das Attribut Attribute umfasst, die von den Sinnesorganen des Fahrers detektiert werden.

8. Verfahren nach mindestens einem der vorstehenden Ansprüche, **dadurch gekennzeichnet, dass** sich das Attribut auf eine Stelle (Ort), eine Straße, eine Route oder ein Gebiet bezieht.

9. Verfahren nach mindestens einem der vorstehenden Ansprüche, **dadurch gekennzeichnet, dass** das Attribut die Umgebungssituation und/oder den Zustand eines Orts, einer Straße oder eines Gebiets beschreibt.

10. Verfahren nach mindestens einem der vorstehenden Ansprüche, **dadurch gekennzeichnet, dass** das Attribut mindestens eine Art von Daten aus der Gruppe Geschwindigkeit, Beschleunigung, Geschwindigkeitsbegrenzung, Baustelle, Pollenflug, Beleuchtung, Smog, Umgebungsbedingungen, Wetterbedingungen und Straßenkriminalität umfasst.

11. Verfahren nach mindestens einem der vorstehenden Ansprüche, **dadurch gekennzeichnet, dass** die Ortsdaten Kartendaten umfassen.

12. Verfahren nach mindestens einem der vorstehenden Ansprüche, **dadurch gekennzeichnet, dass** die Ortsdaten Positionsdaten des Fahrzeugs (1) umfassen.

13. Verfahren nach mindestens einem der vorstehenden Ansprüche, **dadurch gekennzeichnet, dass** das Attribut von dem Fahrer mittels Spracheingabe und/oder einer Tastatur eingegeben wird.

14. Verfahren nach mindestens einem der vorstehenden Ansprüche, **dadurch gekennzeichnet, dass** mindestens einer der Schritte des Detektierens des Attributs durch einen Sensor, des Eingebens der Attributdaten in das Computersystem, des Zuweisens der Attributdaten zu Daten der Ortsdaten und des Speicherns der generierten Verkehrsdaten automatisch nach einem Starten des Motors des Fahrzeugs durchgeführt wird.

15. Verfahren nach mindestens einem der vorstehenden Ansprüche, **dadurch gekennzeichnet, dass** die generierten Verkehrsdaten oder die Verkehrsdaten, die von dem Computersystem auf der Basis der generierten Verkehrsdaten bestimmt wurden, in Abhängigkeit von Positionsdaten des Fahrzeugs ausgegeben werden.

16. Verfahren nach mindestens einem der vorstehenden Ansprüche, **dadurch gekennzeichnet, dass** die generierten Verkehrsdaten oder die Verkehrsdaten, die von dem Computersystem auf der Basis der generierten Verkehrsdaten bestimmt wurden, in Erwiderung auf eine Eingabe eines Fahrziels durch den Fahrer ausgegeben werden.

17. Verfahren nach mindestens einem der vorstehenden Ansprüche, **dadurch gekennzeichnet, dass** die ausgegebenen Verkehrsdaten eine Zeitdauer, während welcher die Daten gültig sind, umfassen.

18. Verfahren nach mindestens einem der vorstehenden Ansprüche, **dadurch gekennzeichnet, dass** die ausgegebenen Verkehrsdaten von dem Computersystem in Abhängigkeit eines Gewichtungsfaktors, der dem Attribut von dem Fahrer zugewiesen wurde, bestimmt werden.

19. Verfahren nach mindestens einem der vorstehenden Ansprüche, **dadurch gekennzeichnet, dass** die ausgegebenen Daten eine Angabe umfassen, dass die ausgegebenen Daten benutzergeneriert sind, bestimmt basierend auf Verkehrsdaten.

20. Verfahren nach einem der vorstehenden Ansprüche, **gekennzeichnet durch** die Schritte eines Übermittelns der generierten Verkehrsdaten an einen zweiten Fahrer, der von dem Fahrer, der die Verkehrsdaten generierte, verschieden ist, und eines Ausgebens der Verkehrsdaten an den zweiten Fahrer.

21. Verfahren nach mindestens einem der vorstehenden Ansprüche, **gekennzeichnet durch** den Schritt eines Berechnens einer Fahrtroute zu einem Endziel auf der Basis der generierten Verkehrsdaten und Ausgeben der berechneten Fahrtroute an den Fahrer **durch** das Computersystem.

22. Verfahren nach Anspruch 21, **gekennzeichnet durch** den Schritt eines Führens eines Fahrers zu einem Endziel basierend auf den generierten Verkehrsdaten **durch** das Computersystem.

23. Verfahren nach Anspruch 21 oder 22, **dadurch gekennzeichnet, dass** das Führen des Fahrers oder das Berechnen der Fahrtroute auf einem Kriterium oder einer Kombination von Kriterien, die von dem Fahrer festgelegt sind, basiert.

24. Verfahren nach Anspruch 23, **dadurch gekennzeichnet, dass** das Kriterium eine Fahrzeit und/oder ein Kraftstoffverbrauch und/oder die Abwesenheit von Pollenflug ist.

25. Verfahren nach mindestens einem der vorstehenden Ansprüche, **dadurch gekennzeichnet, dass** das Verfahren den Schritt eines Ausgebens einer Warnung an den Fahrer umfasst, wenn eine festgelegte Bedingung, die von den generierten Verkehrsdaten abhängt, erfüllt ist.

26. Verfahren nach mindestens einem der vorstehenden Ansprüche, **dadurch gekennzeichnet, dass** zusätzliche Verkehrsdaten von einer externen Informationsstation und/oder einer internen Speichervorrichtung empfangen werden, und zusammen mit den generierten Verkehrsdaten verarbeitet werden und an den Fahrer ausgegeben werden.

27. Verfahren nach mindestens einem der vorstehenden Ansprüche, **dadurch gekennzeichnet, dass** die Schritte des Eingebens des detektierten Attributs in das Computersystem und des Generierens der Verkehrsdaten nach der Fahrt durchgeführt werden.

28. Verfahren nach mindestens einem der vorstehenden Ansprüche, **dadurch gekennzeichnet, dass** der Fahrer, der die Attributdaten erzeugt, und der Fahrer, an welchen die Verkehrsdaten ausgegeben werden, identisch sind.

29. Computerbasiertes System zum Bereitstellen von Verkehrsdaten für einen Fahrer eines Fahrzeugs, umfassend
- ein Mittel (105; 103) zum Bereitstellen von Ortsdaten eines Verkehrsgebiets,
- ein Zuweisungsmittel (101c) zum Zuweisen von Attributdaten zu Daten der Ortsdaten,
- ein Speichermittel (101d) zum Speichern der generierten Verkehrsdaten, die die Daten der Ortsdaten und die zugewiesenen Attributdaten umfassen, und
- ein Ausgabemittel (104; 109) zum Ausgeben der generierten Verkehrsdaten und/oder von Verkehrsdaten, die in Abhängigkeit der generierten Verkehrsdaten bestimmt wurden, an einen Fahrer,
**gekennzeichnet durch** ein Mittel (101, 102) zum Generieren von Attributdaten, das ein Mittel zum Definieren eines Attributs durch den Fahrer **durch** Eingeben eines Attributs in das Computersystem umfasst.

30. System zum Bereitstellen von Verkehrsdaten für einen Fahrer eines Fahrzeugs nach Anspruch 29, **gekennzeichnet durch** ein Auswahlmittel (102) zum Auswählen von Attributdaten, die in dem computerbasierten System (100) gespeichert sind.

31. System zum Bereitstellen von Verkehrsdaten für einen Fahrer eines Fahrzeugs nach Anspruch 29 oder 30, **gekennzeichnet durch** ein Detektionsmittel (110-120) zum Detektieren von Attributdaten.

32. System zum Bereitstellen von Verkehrsdaten für einen Fahrer eines Fahrzeugs nach Anspruch 31, **dadurch gekennzeichnet, dass** das Detektionsmittel (110-120) eine Vorrichtung zum Messen von mindestens einer der Größen Zeit, Tageszeit, Fahrrichtung, Fahrgeschwindigkeit, Temperatur, Luftfeuchtigkeit, Lichtintensität, Kraftstoffverbrauch, Beschleunigung des Fahrzeugs, Fahrzeuggeräusch, Umgebungsgeräusch und Verzögerung des Fahrzeugs umfasst.

33. System zum Bereitstellen von Verkehrsdaten für einen Fahrer nach mindestens einem der Ansprüche 29-32, **dadurch gekennzeichnet, dass** das Mittel (105; 103) zum Bereitstellen von Ortsdaten ein Mittel zum Bestimmen der Position des Fahrzeugs (105, 110, 111) umfasst.

34. System zum Bereitstellen von Verkehrsdaten für einen Fahrer nach Anspruch 33, **dadurch gekennzeichnet, dass** das Mittel zum Bestimmen der Position des Fahrzeugs einen Empfänger zum Empfangen von Positionsdaten zum Bestimmen der Positionsdaten des Fahrzeugs umfasst.

35. System zum Bereitstellen von Verkehrsdaten für einen Fahrer nach mindestens einem der Ansprüche 29-34, **gekennzeichnet durch** eine Telematikeinheit (106) zum Empfangen weiterer Verkehrsdaten und/oder Positionsdaten von einer externen Informationsstation und zum Übermitteln der generierten Verkehrsdaten an eine externe Station.

36. Navigationssystem, das ein System nach mindestens einem der Ansprüche 29-35 umfasst.

## Revendications

1. Procédé d'émission de données de circulation vers un conducteur d'un véhicule, comportant les étapes
- de mettre à disposition dans un système informatique (100} de données de lieu d'une zone de circulation,
- d'allouer des données d'attribut à des données desdites données de lieu pour générer des données de circulation comprenant des données de lieu et des données d'attribut allouées, l'étape d'allocation desdites données d'attribut à des données desdites données de lieu étant au moins initiée par ledit conducteur,
- de mémoriser lesdites données de circulation générées, et
- d'émettre vers un conducteur d'un véhicule lesdites données de circulation et/ou les données de circulation déterminées par ledit système informatique (100) en fonction desdites données de circulation générées,
**caractérisé par** l'étape supplémentaire de génération desdites données d'attribut par la définition d'un attribut par le conducteur par entrée d'un attribut dans ledit système informatique.

2. Procédé selon la revendication 1, **caractérisé par** l'étape supplémentaire de détection dudit attribut par ledit conducteur.

3. Procédé selon la revendication 1, **caractérisé en ce que** ledit attribut inclut des données de conduite dudit véhicule (1).

4. Procédé selon la revendication 3, **caractérisé en ce que** lesdites données de conduite comprennent la durée de parcours et/ou la consommation de carburant dudit véhicule (1).

5. Procédé selon au moins l'une des revendications 1, 3 ou 4, **caractérisé en ce que** ledit attribut est détecté par une mesure sensorielle d'un senseur (110-120) dudit véhicule.

6. Procédé selon au moins l'une des revendications précédentes, **caractérisé en ce que** ledit attribut est détecté en continu lors d'un parcours en distance du véhicule.

7. Procédé selon au moins l'une des revendications 1, 2 ou 6, **caractérisé en ce que** ledit attribut inclut des attributs détectés par les organes de sens dudit conducteur.

8. Procédé selon au moins l'une des revendications précédentes, **caractérisé en ce que** ledit attribut correspond à un emplacement (lieu), une rue, une route ou une zone.

9. Procédé selon au moins l'une des revendications précédentes, **caractérisé en ce que** ledit attribut décrit la situation environnementale et/ou l'état d'un lieu, d'une rue, ou d'une zone.

10. Procédé selon au moins l'une des revendications précédentes, **caractérisé en ce que** ledit attribut comporte au moins un type de données parmi celles du groupe incluant la vitesse, l'accélération, la limitation de vitesse, le chantier, la charge pollinique, l'illumination, le smog, les conditions environnementales, les conditions météorologiques et la criminalité dans la rue.

11. Procédé selon au moins l'une des revendications précédentes, **caractérisé en ce que** lesdites données de lieu comprennent des données de cartes routières.

12. Procédé selon au moins l'une des revendications précédentes, **caractérisé en ce que** lesdites données de lieu comprennent des données de position dudit véhicule (1).

13. Procédé selon au moins l'une des revendications précédentes, **caractérisé en ce que** ledit attribut est entré par le conducteur par l'intermédiaire d'une entrée vocale et/ou par clavier.

14. Procédé selon au moins l'une des revendications précédentes, **caractérisé en ce qu'**au moins une des étapes de détection dudit attribut par un senseur, d'entrée desdites données d'attribut dans le système informatique, d'allocation desdites données d'attribut à des données desdites données de lieu et de mémorisation desdites données de circulation générées est exécutée automatiquement après le démarrage du moteur dudit véhicule.

15. Procédé selon au moins l'une des revendications précédentes, **caractérisé en ce que** lesdites données de circulation générées ou lesdites données de circulation déterminées par ledit système informatique sur la base desdites données de circulation générées sont émises en fonction de données de position dudit véhicule.

16. Procédé selon au moins l'une des revendications précédentes, **caractérisé en ce que** lesdites données de circulation générées ou lesdites données de circulation déterminées par ledit système informatique sur la base desdites données de circulation générées sont émises en réponse à une entrée d'une destination de parcours par ledit conducteur.

17. Procédé selon au moins l'une des revendications précédentes, **caractérisé en ce que** lesdites données de circulation émises incluent une période de temps pendant laquelle lesdites données sont valides.

18. Procédé selon au moins l'une des revendications précédentes, **caractérisé en ce que** lesdites données de circulation émises sont déterminées par ledit système informatique en fonction d'un facteur de pondération affecté audit attribut par ledit conducteur.

19. Procédé selon au moins l'une des revendications précédentes, **caractérisé en ce que** lesdites données émises incluent une indication que les données émises sont générées par l'utilisateur, déterminées à base de données de circulation.

20. Procédé selon l'une quelconque des revendications précédentes, **caractérisé par** les étapes de transmission des données de circulation générées vers un second conducteur différent du conducteur ayant généré les données de circulation, et d'émission desdites données de circulation vers ledit second conducteur.

21. Procédé selon au moins l'une des revendications précédentes, **caractérisé par** l'étape de calcul d'une route de parcours vers une destination finale, basé sur lesdites données de circulation générées, et d'émission de ladite route de parcours calculée vers le conducteur par ledit système informatique.

22. Procédé selon la revendication 21, **caractérisé par** l'étape de guidage d'un conducteur vers une destination finale basé sur les données de circulation générées par ledit système informatique.

23. Procédé selon la revendication 21 ou 22, **caractérisé en ce que** le guidage du conducteur ou le calcul de la route de parcours sont basés sur un critère ou sur une combinaison de critères fixés par ledit conducteur.

24. Procédé selon la revendication 23, **caractérisé en ce que** ledit critère est la durée de parcours et/ou la consommation de carburant et/ou l'absence de charge pollinique.

25. Procédé selon au moins l'une des revendications précédentes, **caractérisé en ce que** le procédé inclut l'étape d'émission d'une alarme vers le conducteur lorsqu'une condition prédéterminée fonction des données de circulation générées est vérifiée.

26. Procédé selon au moins l'une des revendications précédentes, **caractérisé en ce que** des données de circulation supplémentaires sont reçues en provenance d'un poste d'information externe et/ou d'un dispositif de mémorisation interne et sont traitées en commun avec lesdites données de circulation générées et émises vers ledit conducteur.

27. Procédé selon au moins l'une des revendications précédentes, **caractérisé en ce que** les étapes d'entrée dans ledit système informatique dudit attribut détecté et de génération desdites données de circulation sont effectuées après le parcours.

28. Procédé selon au moins l'une des revendications précédentes, **caractérisé en ce que** le conducteur générant les données d'attribut et le conducteur vers qui les données de circulation sont émises sont identiques.

29. Système informatique pour mettre à la disposition d'un conducteur d'un véhicule des données de circulation, comprenant
- un moyen (105; 103), pour mettre à disposition des données de lieu d'une zone de circulation,
- un moyen d'allocation (101c), pour allouer des données d'attribut à des données desdites données de lieu,
- un moyen de mémorisation (101d), pour mémoriser lesdites données de circulation générées comprenant lesdites données desdites données de lieu et lesdites données d'attribut allouées, et
- un moyen d'émission (104; 109), pour émettre les données de circulation générées et/ou les données de circulation déterminées en fonction desdites données de circulation générées vers un conducteur,
**caractérisé par** un moyen (101, 102) pour générer des données d'attribut comprenant un moyen de définition d'un attribut par le conducteur par l'entrée d'un attribut dans ledit système informatique.

30. Système pour mettre à la disposition d'un conducteur d'un véhicule des données de circulation selon la revendication 29, **caractérisé par** un moyen de sélection (102) pour choisir des données d'attribut mémorisées dans ledit système informatique (100).

31. Système pour mettre à la disposition d'un conducteur d'un véhicule des données de circulation selon la revendication 29 ou 30, **caractérisé par** un moyen de détection (110-120) pour détecter des données d'attribut.

32. Système pour mettre à la disposition d'un conducteur d'un véhicule des données de circulation selon la revendication 31, **caractérisé en ce que** ledit moyen de détection (110-120) inclut un dispositif pour mesurer au moins l'une des valeurs suivantes: le temps, l'heure du jour, la direction de parcours, la vitesse de conduite, la température, l'humidité atmosphérique, l'intensité de la lumière, la consommation de carburant, l'accélération du véhicule, le bruit du véhicule, le bruit ambiant, et la décélération du véhicule.

33. Système pour mettre à la disposition d'un conducteur des données de circulation selon au moins l'une des revendications 29 à 32, **caractérisé en ce que** ledit moyen (105; 103) pour mettre à disposition des données de lieu comprend des moyens pour déterminer la position du véhicule (105, 110, 111).

34. Système pour mettre à la disposition d'un conducteur des données de circulation selon la revendication 33, **caractérisé en ce que** ledit moyen pour déterminer la position du véhicule comprend un récepteur pour recevoir des données de position pour déterminer les données de position dudit véhicule.

35. Système pour mettre à la disposition d'un conducteur des données de circulation selon au moins l'une des revendications 29 à 34, **caractérisé par** une unité télématique (106) pour recevoir des données de circulation et/ou des données de position supplémentaires d'un poste externe d'information et pour transmettre les données de circulation générées à un poste externe.

36. Système de navigation comprenant un système selon au moins l'une des revendications 29 à 35.
